# EUROPÄISCHE PATENTSCHRIFT

(11) **EP 2 976 541 B1**
(45) Veröffentlichungstag und Bekanntmachung des Hinweises auf die Patenterteilung: **14.02.2018**
(21) Anmeldenummer: 14709955.0
(22) Anmeldetag: 13.03.2014
(51) Int. Cl.: F16D 27/14, F16D 27/112

(54) **ELEKTROMAGNETISCHE KUPPLUNGSVORRICHTUNG**
ELECTROMAGNETIC COUPLING APPARATUS
DISPOSITIF D'ACCOUPLEMENT ÉLECTROMAGNÉTIQUE

(30) Priorität: 18.03.2013 DE 202013002597 U
(43) Veröffentlichungstag der Anmeldung: 27.01.2016
(73) Patentinhaber: Erwin A. Lang GmbH & Co. KG, 88212 Ravensburg (DE)
(72) Erfinder: KUMPF, Hans-Peter, 88212 Ravensburg (DE)
(74) Vertreter: Thum, Bernhard
(86) Internationale Anmeldenummer: PCT/EP2014/054974
(87) Internationale Veröffentlichungsnummer: WO 2014/146969

(56) Entgegenhaltungen:
- EP-A1- 0 643 236
- EP-A2- 0 741 254
- WO-A1-2008/146635

## Beschreibung

Die vorliegende Erfindung betrifft eine elektromagnetische Kupplungsvorrichtung für Antriebsanordnungen mit einer wenigstens eine Ankerscheibe umfassenden Ankerscheibenanordnung und einer Rotoranordnung.

Bei derartigen elektromagnetischen Kupplungsvorrichtungen muss zwischen der Ankerscheibenanordnung bzw. zwischen der Ankerscheibe und einer Rotoranordnung ein vorbestimmter Luftspalt eingestellt werden, um im entkoppelten Zustand Berührungen zwischen der Ankerscheibenanordnung und der Rotoranordnung auszuschließen.

Bei gehäusemontierten Kupplungsvorrichtungen, d.h. bei Kupplungsvorrichtung, die an einem Gehäuse eines Hilfsaggregats eines Fahrzeugs, wie z.B. einem Klimakompressor, angebracht werden, muss der Luftspalt während der Montage der Kupplungsvorrichtung eingestellt werden.

Derzeit wird der Luftspalt in der Praxis zumeist durch Einlegen von sich in ihrer Dicke unterscheidenden Passscheiben oder durch Einlegen verschiedener Federelemente zwischen die Ankerscheibenanordnung und die Rotoranordnung eingestellt. Die Ankerscheibenanordnung der zu montierenden Kupplung muss dabei bei der Einstellung des Luftspalts so lange an dem Hilfsaggregat bzw. einer Antriebswelle des Hilfsaggregats angebracht und abgenommen werden, bis der vorbestimmte Luftspalt über die Passscheiben eingestellt ist, da der Luftspalt nur im montierten Zustand der Ankerscheibenbaugruppe gemessen werden kann.

Im Einzelnen wird zunächst der Luftspalt im montierten Zustand der Kupplung gemessen. Sollte der vorbestimmte bzw. gewünschte Luftspalt noch nicht eingestellt sein, wird die Ankerscheibenanordnung vollständig abmontiert, und es werden eine oder mehrere Passscheiben eingelegt. Die Ankerscheibenanordnung wird nun wieder montiert und der Luftspalt erneut gemessen. Sollte der vorbestimmte Luftspalt erneut nicht eingestellt worden sein, beginnt das Verfahren wieder von vorne. Bei elektromagnetischen Kupplungen wird die Ankerscheibenanordnung zumeist auf die Antriebswelle des Hilfsaggregats aufgepresst, was die möglicherweise mehrfache Demontage der Ankerscheibenanordnung sehr aufwändig und zeitintensiv macht.

Ferner sind aus dem Stand der Technik elektromagnetische Kupplungen der in dem Dokument DE 20 2006 016 144 U1 beschriebenen Art bekannt, die eine Einstellbarkeit des Luftspalts vorsehen. Bei der Kupplung gemäß diesem Dokument wird eine Ankerscheibenbaugruppe von einem mit einer Nabe ausgebildeten Flansch und einem weiteren Flansch gebildet, an dem eine Ankerscheibe angebracht ist. Der Ankerscheibenflansch weist ein Innengewinde und der Nabenflansch weist ein Außengewinde auf. Das Außengewinde des Nabenflansches wirkt mit dem Innengewinde des Ankerscheibenflansches zur Einstellung des Luftspaltes zusammen. Der Ankerscheibenflansch umgibt den Nabenflansch. Der Ankerscheibenflansch wird solange relativ zu dem Nabenflansch mittels der ineinander eingreifen Gewinde verdreht, bis sich der gewünschte Luftspalt zwischen dem Rotor und der Ankerscheibe einstellt. Die Ankerscheibe bzw. der Ankerscheibenflansch weist zudem Gewindebohrungen auf, die mit Bohrungen in dem Nabenflansch zur Sicherung des eingestellten Luftspalts zusammenwirken müssen. Der Ankerscheibenflansch muss dabei weiter relativ zu dem Nabenflansch verdreht werden, bis zwei Gewindebohrungen des Ankerscheibenflansches deckungsgleich mit zwei Bohrungen des Nabenflansches liegen, so dass in die beiden Gewindebohrungs-/Bohrungspaare jeweils eine Schraube eingeschraubt werden kann, um den eingestellten Luftspalt zu sichern und ein weiteres Verdrehen zwischen dem Nabenflansch und dem Ankerscheibenflansch zu verhindern.

Die Kupplung gemäß dem Dokument DE 20 2006 016 144 U1 weist einen relativ komplexen Aufbau auf, da zum einen zwei Flansche mit einem Innen- bzw. Außengewinde versehen werden und die beiden Flansche noch eine Mehrzahl von Bohrungen bzw. Gewindebohrungen aufweisen müssen, die zur Sicherung des eingestellten Luftspalts mit Hilfe einer Schraube dienen. Alleine die Ausbildung einer Mehrzahl von Gewindebohrungen bzw. Bohrungen in den beiden Flanschen, die in bestimmten Positionen deckungsgleich zum Einschrauben einer Schraube übereinander liegen, ist relativ zeit- und kostenintensiv. Gleiches gilt für die Ausbildung der relativ großen Gewinde an den beiden Flanschen gemäß diesem Dokument.

WO 2008/146635 A1 offenbart eine elektromagnetische Kupplungsvorrichtung, bei der ein Luftspalt zwischen einer Ankeranordnung und einem Rotor einstellbar ist. Die Vorrichtung weist eine Einstellmutter zum Einstellen des Luftspalts auf, die über eine Schraube mit einer Antriebswelle verbunden ist.

EP 0 643 236 A1 offenbart eine Vorrichtung zum elektromagnetischen Koppeln, die eine Ankeranordnung sowie einen Rotor aufweist. Die Ankeranordnung wird mit einer Schraube über eine Montageplatte und eine Nabe mit einer Welle verbunden.

EP 0 741 254 A2 offenbart eine Spulenanordnung für eine elektromagnetische Vorrichtung.

Dementsprechend ist es eine Aufgabe der vorliegenden Erfindung, eine elektromagnetische Kupplung bereitzustellen, die eine Vereinfachung des eingangs beschriebenen Verfahrens ermöglicht, und einen weitaus weniger komplexen Aufbau als die in dem Dokument DE 20 2006 016 144 U1 beschriebene Kupplung aufweist.

Diese Aufgabe wird mit einer elektromagnetischen Kupplungsvorrichtung der eingangs bezeichneten Art gelöst, bei der die Ankerscheibenanordnung zumindest eine eine Verschlussschraube aufweisende Luftspalteinstelleinheit umfasst, die zur Einstellung eines Luftspalts zwischen der Ankerscheibenanordnung und der Rotoranordnung mit einer Befestigungsschraube zum Befestigen der Ankerscheibenanordnung an einer Antriebswelle zusammenwirkt.

Mit der die Verschlussschraube aufweisenden Luftspalteinstelleinheit kann erreicht werden, dass selbst dann, wenn Abstandseinstellmittel zur Einstellung des Luftspalts zwischen der Ankerscheibenanordnung und der Rotoranordnung benötigt werden, diese ohne Abnehmen der gesamten Ankerscheibenanordnung von der Antriebswelle angebracht werden können, und somit der Luftspalt zwischen der Ankerscheibenanordnung und der Rotoranordnung verglichen mit dem Stand der Technik schnell und einfach eingestellt werden kann.

Für den Fall, dass der initiale Luftspalt, der über die Verschlussschraube und die Befestigungsschraube eingestellt wird, nicht mit dem im montierten Zustand zu erreichenden vorbestimmten (Soll-)Luftspalt übereinstimmt, wird erfindungsgemäß die Luftspalteinstelleinheit wenigstens ein Abstandseinstellmittel umfassen. Die Abstandseinstellmittel können über die Verschlussschraube an der Ankerscheibenanordnung angebracht werden. In Abhängigkeit des einzustellenden Luftspalts bzw. des vorliegenden, gemessenen Luftspalts zwischen der Rotoranordnung und der Ankerscheibenanordnung werden ein oder mehrere Abstandseinstellmittel über die Verschlussschraube an der Ankerscheibenanordnung angebracht, um einen vorbestimmten Luftspalt einzustellen. Die Abstandseinstellmittel können bevorzugt Passscheiben, aber auch Federelemente oder dergleichen sein.

Die Verschlussschraube kann von der Ankerscheibenanordnung abgenommen werden. Über die Verschlussschraube können in Abhängigkeit von dem gemessenen Luftspalt zwischen der Rotoranordnung und der Ankerscheibenanordnung die zur Einstellung des vorbestimmten Luftspalts benötigten Abstandseinstellmittel an der Ankerscheibenanordnung angebracht werden. Die Verschlussschraube wird anschließend wieder mit der Ankerscheibenanordnung verbunden und die Befestigungsschraube wird zur Befestigung der Ankerscheibenanordnung an einer Antriebswelle eingesetzt und mit der Antriebswelle verschraubt. Dann wird der Luftspalt erneut gemessen. Sollte der vorbestimmte Luftspalt wiederum nicht korrekt eingestellt worden sein, müssen lediglich die Befestigungsschraube und die Verschlussschraube abgenommen bzw. gelöst werden und andere bzw. zusätzliche Abstandseinstellmittel eingelegt bzw. die Anzahl der Abstandseinstellmittel verändert werden. Anschließend werden die Verschlussschraube und die Befestigungsschraube erneut mit der Ankerscheibenanordnung bzw. mit der Antriebswelle verschraubt, wodurch sich über die Abstandseinstellmittel und die Verschlussschraube der vordefinierte Luftspalt zwischen der Rotoranordnung und der Ankerscheibenanordnung einstellt. Verglichen mit dem Stand der Technik erlaubt die erfindungsgemäße elektromagnetische Kupplungsvorrichtung somit eine sehr viel einfachere und weniger zeitintensive Einstellung des Luftspalts zwischen der Ankerscheibenanordnung und der Rotoranordnung.

Die Befestigungsschraube kann sich gemäß einer Weiterbildung der Erfindung durch die Verschlussschraube erstrecken. Wie bereits erwähnt, werden über die Verschlussschraube, falls nötig, Abstandseinstellmittel an der Ankerscheibenanordnung angebracht. Da in den meisten Fällen eine Presspassung zwischen der Ankerscheibenanordnung und der Antriebswelle des Hilfsaggregats vorliegt, wird zur endgültigen Einstellung des Luftspalts ein gewisser Kraftaufwand benötigt, um die Ankerscheibenanordnung mit der Verschlussschraube in ihre Endposition zu bringen. Diese Kraft wird einfach und unmittelbar über die Befestigungsschraube auf die Verschlussschraube und damit die Ankerscheibenanordnung ausgeübt, um diese in der durch die Abstandseinstellmittel und die Verschlussschraube bestimmten Endposition an der Antriebswelle anzubringen, wobei durch die Endposition der Verschlussschraube der Luftspalt zwischen der Ankerscheibe und der Rotoranordnung bestimmt wird.

Die Verschlussschraube kann vorzugsweise einen flanschförmigen Abschnitt aufweisen, der sich in radialer Richtung erstreckt. Der flanschförmige Abschnitt der Verschlussschraube kann zum Anbringen der Abstandseinstellmittel an der Ankerscheibenanordnung dienen. Die Abstandseinstellmittel können sich beispielsweise an den flanschförmigen Abschnitt der Verschlussschraube anlegen.

Die Ankerscheibenanordnung kann gemäß einer Ausführungsform der Erfindung einen Flansch aufweisen, der sich in radialer Richtung erstreckt. An dem Flansch kann vorzugsweise ein nabenförmiger Abschnitt zum Aufnehmen einer Antriebswelle ausgebildet sein. Die Ankerscheibenanordnung wird an der Antriebswelle, beispielsweise eines Kompressors, angebracht. Dies erfolgt über einen nabenförmigen Abschnitt an dem Flansch der Ankerscheibenanordnung, der die Antriebswelle zumindest abschnittsweise aufnehmen kann.

Das wenigstens eine Abstandseinstellmittel kann zwischen dem flanschförmigen Abschnitt der Verschlussschraube und dem Flansch der Ankerscheibenanordnung angeordnet sein. Anders ausgedrückt, wird das wenigstens eine Abstandseinstellmittel über die Verschlussschraube bzw. deren flanschförmigen Abschnitt an dem Flansch der Ankerscheibenanordnung angebracht, um den vorbestimmten Luftspalt einstellen zu können.

Gemäß einer Ausführungsform der Erfindung kann die Verschlussschraube in eine Öffnung des Flansches der Ankerscheibenanordnung eingeschraubt werden. Dabei kann sich die Verschlussschraube in axialer Richtung an den nabenförmigen Abschnitt des Flansches anschließen.

Über das wenigstens eine Abstandseinstellmittel kann gemäß einer Weiterbildung der Erfindung die Position der Verschlussschraube in axialer Richtung nach dem Einschrauben in die Öffnung in dem Flansch verändert werden. Das wenigstens eine Abstandseinstellmittel kann zwischen dem Flansch der Verschlussschraube und dem Flansch der Ankerscheibenanordnung vorgesehen sein, sozusagen zwischen die Ankerscheibenanordnung und die Verschlussschraube eingespannt werden. Da die Verschlussschraube nicht mehr so weit in die Öffnung der Ankerscheibenanordnung eingeschraubt werden kann, wie ohne Abstandseinstellmittel, verändert sich die Position der Verschlussschraube in der Öffnung in dem Flansch. Dadurch wird die Position der Ankerscheibenanordnung nach dem Einschrauben der Befestigungsschraube auf der Antriebswelle zur Einstellung des Luftspalts verändert.

Vorzugsweise kann die Verschlussschraube derart ausgebildet sein, dass sie einen Kopf der Befestigungsschraube aufnimmt. Eine auf die Befestigungsschraube ausgeübte Befestigungskraft kann über die Befestigungsschraube auf die Verschlussschraube während des Befestigens der Ankerscheibenanordnung ausgeübt werden.

Gemäß einer Ausführungsform kann das wenigstens eine Abstandseinstellmittel im Wesentlichen scheibenförmig ausgebildet sein. Vorzugsweise kann sich die Verschlussschraube durch das wenigstens eine Abstandseinstellmittel erstrecken.

Die Rotoranordnung kann zur Übertragung einer Antriebskraft auf die wenigstens einen Riemenscheibenauflageabschnitt umfassen.

Die vorliegende Erfindung betrifft ferner ein Hilfsaggregat für ein Fahrzeug mit einer Kupplungsvorrichtung der voranstehend beschriebenen Art. Das Hilfsaggregat kann bespielsweise ein Kompressor sein. Bei dem Hilfsaggregat gemäß der Erfindung ist die Ankerscheibenanordnung über den nabenförmigen Abschnitt des Flansches und die Befestigungsschraube fest mit der Antriebswelle des Hilfsaggregats verbunden. Die Verschlussschraube ist dabei über die Befestigungsschraube mit der Antriebswelle des Hilfsaggregats in Anlage bringbar.

In Abhängigkeit von dem wenigstens einen Abstandseinstellmittel kann die Position der Ankerscheibenanordnung auf der Antriebswelle des Hilfsaggregats nach dem Verschrauben der Befestigungsschraube mit der Antriebswelle verändert sein.

Die Befestigungsschraube kann vorzugsweise in eine Öffnung in einer axialen Endfläche der Antriebswelle eingeschraubt werden. Die axiale Endfläche der Verschlussschraube kann sich dabei an die axiale Endfläche der Antriebswelle anlegen.

Im Folgenden wird eine Ausführungsform der vorliegenden Erfindung anhand der beigefügten Figuren beschrieben.

Es stellen dar:
- Fig. 1: eine Schnittansicht der erfindungsgemäßen Kupplungsvorrichtung im an einer Antriebswelle angebrachten Zustand;
- Fig. 2: eine Schnittansicht der Kupplungsvorrichtung gemäß der Erfindung mit demontierter Befestigungsschraube;
- Fig. 3: eine Schnittansicht der Kupplungsvorrichtung gemäß der Erfindung mit demontierter Verschlussschraube;
- Fig. 4: eine Schnittansicht der Kupplungsvorrichtung gemäß der Erfindung mit eingesetztem Abstandseinstellmittel und montierter Verschlussschraube; und
- Fig. 5: eine Schnittansicht der Kupplungsvorrichtung gemäß der Erfindung mit zwischen Verschlussschraube und Ankerscheibenanordnung angeordnetem Abstandseinstellmittel.

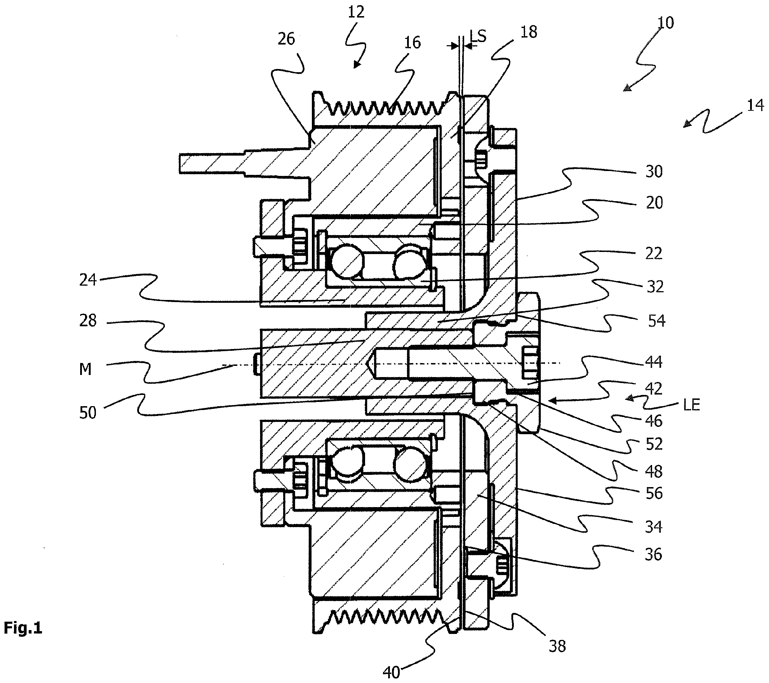

Fig. 1 zeigt eine Schnittansicht der erfindungsgemäßen elektromagnetischen Kupplungsvorrichtung, die allgemein mit 10 bezeichnet ist.

Die Kupplungsvorrichtung 10 umfasst eine Rotoranordnung 12 und eine Ankerscheibenanordnung 14.

Die Rotoranordnung 12 umfasst einen Riemenauflageabschnitt 16, auf dem im Betrieb der Kupplungsvorrichtung 10 ein Antriebsriemen (nicht gezeigt) aufliegt. Der Antriebsriemen dient zum Antreiben der Rotoranordnung 12. Der Riemenauflageabschnitt 16 ist über einen sich in radialer Richtung erstreckenden Flanschabschnitt 18 mit einer Nabe 20 der Rotoranordnung 12 verbunden.

Die Rotoranordnung 12 weist ferner ein Wälzlager 22 auf, das mit einem Anschlusselement 24 zum Anschließen der Rotoranordnung 12 bzw. der Kupplungsvorrichtung 10 an ein nicht gezeigtes Hilfsaggregat eines Kraftfahrzeugs, wie beispielsweise an einen Kompressor, dient. Das Anschlusselement 24 ist ortsfest an dem Hilfsaggregat angebracht, so dass sich die Nabe 20 mit dem Flansch 18 und dem Riemenauflageabschnitt 16 über das Wälzlager 22 an dem Anschlusselement 24 im Betrieb der Kupplungsvorrichtung 10 abwälzen kann.

Die Kupplungsvorrichtung 10 umfasst eine elektromagnetische Einrichtung 26 mit beispielsweise einer Magnetspule und einem Anschlusskabel für die Stromversorgung der elektromagnetischen Einrichtung 26. Die elektromagnetische Einrichtung 26 ist über das ortsfeste Anschlusselement 24 an dem über die Kupplungsvorrichtung 10 anzutreibenden Hilfsaggregat (nicht gezeigt) angebracht. Durch eine Ausnehmung in dem Anschlusselement 24 erstreckt sich in Richtung der Achse M eine Antriebswelle 28 des Hilfsaggregats.

An der Antriebswelle 28 ist die Ankerscheibenanordnung 14 angebracht. Die Ankerscheibenanordnung 14 umfasst einen Flansch 30. Der Flansch 30 weist einen nabenförmigen Abschnitt 32 auf, der zum Aufnehmen der Antriebswelle 28 ausgebildet ist. Der nabenförmige Abschnitt 32 und die Antriebswelle 28 sind vorzugsweise über eine Presspassung miteinander verbunden.

An dem Flansch 30 ist ferner eine Ankerscheibe 34 angeordnet. Der Flansch 30 und die Ankerscheibe 34 sind vorzugsweise über Befestigungsmittel 36, wie zum Beispiel Schrauben, miteinander verbunden. Die Ankerscheibe 34 weist eine der Rotoranordnung 12 zugewandte Ankerreibfläche 38 auf. Der Flanschabschnitt 18 der Rotoranordnung 12 weist eine der Ankerscheibe 34 zugewandte Rotorreibfläche 40 auf. Dementsprechend liegen sich die Ankerreibfläche 38 und die Rotorreibfläche 40 gegenüber. Zwischen der Ankerreibfläche 38 und der Rotorreibfläche 40 soll ein vorbestimmter Luftspalt LS eingestellt werden.

Die Ankerscheibenanordnung 14 bzw. die Kupplungsvorrichtung 10 weist zur Einstellung des Luftspalts LS eine Luftspalteinstelleinheit LE auf, die eine Verschlussschraube 42 umfasst. Die Verschlussschraube 42 wird von einer Befestigungsschraube 44 durchsetzt, die zur Befestigung der Ankerscheibenanordnung 14 an der Antriebswelle 28 des Hilfsaggregats (nicht gezeigt) dient. Anders ausgedrückt, weist die Verschlussschraube 42 eine Öffnung 46 auf, durch die sich die Befestigungsschraube 44 erstreckt. Die Öffnung 46 ist gestuft ausgebildet, und die Befestigungsschraube 44 legt sich mit ihrem Schraubenkopf an die Stufe der Öffnung 46 an.

Die Verschlussschraube 42 ist an dem Flansch 30 der Ankerscheibenanordnung 14 vorgesehen. In dem Flansch 30 ist eine Öffnung 48 ausgebildet, die ein in Fig. 1 andeutungsweise erkennbares Innengewinde umfasst. Die Verschlussschraube 42 sowie der nabenförmige Abschnitt 32 des Flansches 30 sind koaxial ausgebildet und die Verschlussschraube 42 schließt sich in Richtung der Achse M an den nabenförmigen Abschnitt 32 an.

Im eingeschraubten Zustand legt sich die Verschlussschraube 42 an eine axiale Endfläche 50 der Antriebswelle 28 an.

Die Verschlussschraube 42 weist einen sich in radialer Richtung erstreckenden flanschförmigen Abschnitt 52 auf. Die dem Flansch 30 der Ankerscheibenanordnung 14 zugewandte Seite 54 des Flansches 52 der Verschlussschraube 42 legt sich gemäß Fig.1 direkt an die Fläche 56 des Flansches 30 der Ankerscheibenanordnung 14 an, wodurch ein initialer Luftspalt LS zwischen der Rotoranordnung 12 und der Ankerscheibe 14 eingestellt wird.

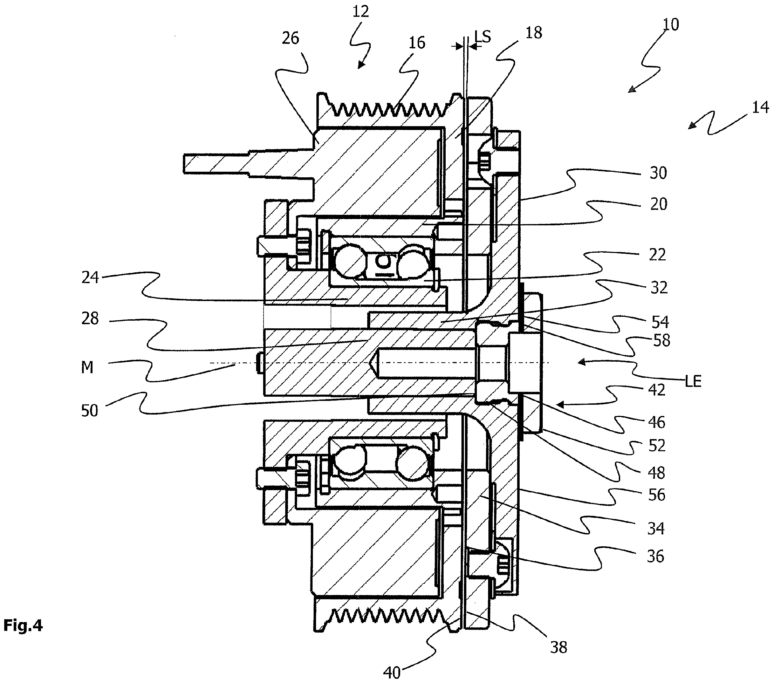

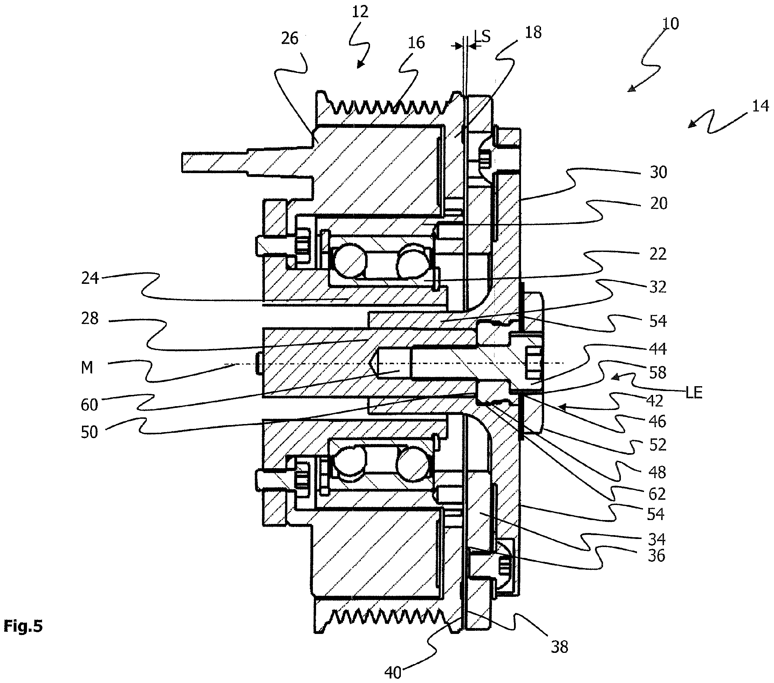

Für den Fall, dass der initiale Luftspalt LS nicht mit dem vorbestimmten Soll-Luftspalt LS übereinstimmt, kann die Luftspalteinstelleinheit LE ein Abstandseinstellmittel (Figuren 4 und 5) umfassen. In diesem Fall wirken die Seite 54 des Flansches 52 und die Fläche 56 des Flanschens 30 der Ankerscheibenanordnung 14 mit dem in Fig. 1 nicht gezeigten Abstandseinstellmittel (Figuren 4 und 5) der Luftspalteinstelleinheit LE zur Einstellung des Luftspaltes LS zwischen der Ankerreibfläche 38 und der Rotorreibfläche 40 zusammen.

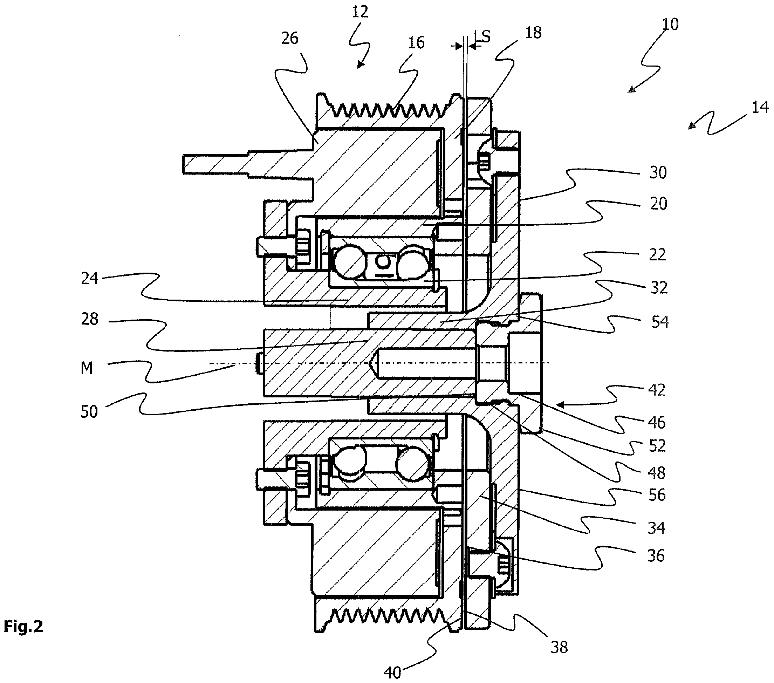

Im Folgenden wird mit Bezug auf die Fig. 2-5 die Vorgehensweise bei der Einstellung des Luftspalts bei der Kupplungsvorrichtung 10 beschrieben.

Wie in Fig. 2 gezeigt ist, wird zunächst die Befestigungsschraube 44 abgenommen, so dass die Ankerscheibenanordnung 14 ausschließlich über die Presspassung zwischen dem nabenförmigen Abschnitt 32 des Flansches 30 an der Antriebswelle 28 des Hilfsaggregats (nicht gezeigt) gehalten wird.

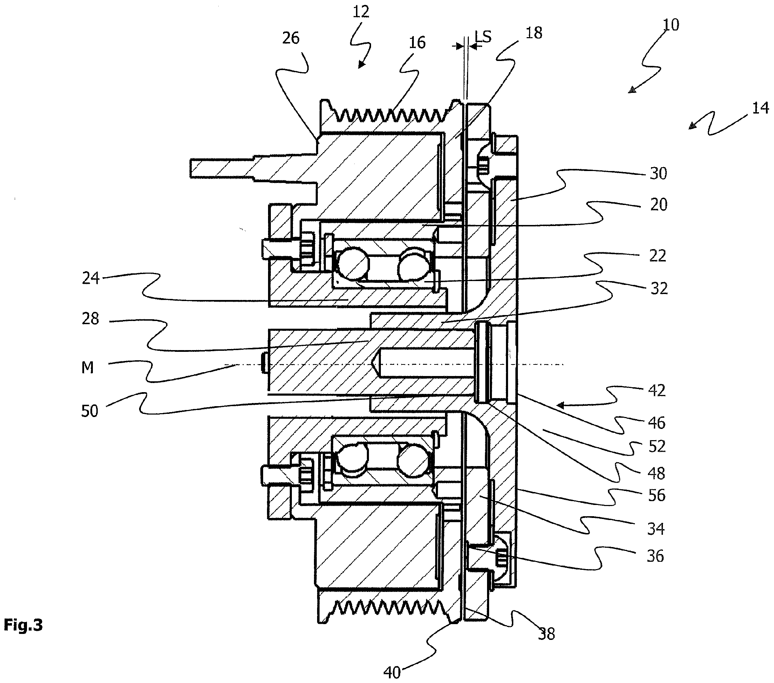

Im Anschluss daran wird, wie in Fig. 3 gezeigt ist, die Verschlussschraube 42 aus der Öffnung 48 im Flansch 30 herausgeschraubt.

Dann wird wenigstens ein Abstandseinstellmittel 58 bzw. die richtige Anzahl an Abstandseinstellmitteln 58, die in Fig. 4 nur schematisch gezeigt sind, zwischen den Flansch 30 der Ankerscheibenanordnung 14 und den Flansch 52 der Verschlussschraube 42 eingelegt bzw. auf die Verschlussschraube 42 aufgesteckt, und die Verschlussschraube 42 wird wieder in die Öffnung 48 eingeschraubt. Mit anderen Worten, klemmen die Fläche 56 des Flansches 30 der Ankerscheibenanordnung 14 und die Seite 54 des Flansches 52 der Verschlussschraube 42 zwischen sich das Abstandseinstellmittel 58 ein.

Wie in Fig. 5 gezeigt ist, wird als letzter Schritt die Befestigungsschraube 44 durch die Verschlussschraube 42 gesteckt und in eine Öffnung 60 der Antriebswelle 28 eingeschraubt bzw. mit der Antriebswelle 28 verschraubt. Durch das Einlegen des Abstandseinstellmittels 58 zwischen die Seite 56 des Flansches 30 und die Seite 54 des Flansches 52 der Verschlussschraube 42 kann die Verschlussschraube 42 nicht mehr vollständig in die Öffnung 48 des Flansches 30 eingeschraubt werden. Dadurch entsteht ein größerer Abstand (nicht gezeigt) zwischen der axialen Endfläche 50 der Antriebswelle 28 und der axialen Endfläche 62 der Verschlussschraube 42. Dieser vergrößerte Abstand kann im Bereich von wenigen Hundertstel Millimeter liegen. Durch das Einschrauben der Befestigungsschraube 44 in die Öffnung der Antriebswelle 28 wird die Verschlussschraube 42 bzw. deren axiale Endfläche 62 wieder in Anlage mit der axialen Endfläche 50 der Antriebswelle 28 gebracht. Dadurch wird die Position des nabenförmigen Abschnitts 32 des Flansches 30 bzw. die Position der gesamten Ankerscheibenanordnung 14 auf der Antriebswelle 28 um die Dicke des oder der eingefügten Abstandseinstellmittel(s) verschoben. Durch die Veränderung der Position des nabenförmigen Abschnitts 32 auf der Antriebswelle 28 wird der gewünschte Luftspalt LS zwischen der Ankerreibfläche 38 und der Rotorreibfläche 40 eingestellt.

## Patentansprüche

1. Elektromagnetische Kupplungsvorrichtung (10) für Antriebsanordnungen mit:
- einer Ankerscheibenanordnung (14), die wenigstens eine Ankerscheibe umfasst,
- einer Rotoranordnung (12), wobei
die Ankerscheibenanordnung (14) zumindest eine eine Verschlussschraube (42) aufweisende Luftspalteinstelleinheit (LE) umfasst, die zur Einstellung eines Luftspalts (LS) zwischen der Ankerscheibenanordnung (14) und der Rotoranordnung (12) mit einer Befestigungsschraube (44) zum Befestigen der Ankerscheibenanordnung (14) an einer Antriebswelle (28) zusammenwirkt,
**dadurch gekennzeichnet, dass** die Luftspalteinstelleinheit (LE) wenigstens ein Abstandseinstellmittel (58) umfasst, das über die Verschlussschraube (42) an der Ankerscheibenanordnung (14) angebracht ist.

2. Elektromagnetische Kupplungsvorrichtung (10) nach Anspruch 1,
**dadurch gekennzeichnet, dass** sich die Befestigungsschraube (44) durch die Verschlussschraube (42) erstreckt.

3. Elektromagnetische Kupplungsvorrichtung (10) nach einem der voranstehenden Ansprüche,
**dadurch gekennzeichnet, dass** die Verschlussschraube (42) einen flanschförmigen Abschnitt (52) aufweist, der sich in radialer Richtung erstreckt.

4. Elektromagnetische Kupplungsvorrichtung (10) nach einem der voranstehenden Ansprüche,
**dadurch gekennzeichnet, dass** die Ankerscheibenanordnung (14) wenigstens einen Flansch (30) aufweist, der sich in radialer Richtung erstreckt, und an dem ein nabenförmiger Abschnitt (32) zum Aufnehmen einer Antriebswelle (28) ausgebildet ist.

5. Elektromagnetische Kupplungsvorrichtung (10) nach Anspruch 3 und 4, **dadurch gekennzeichnet, dass** das wenigstens eine Abstandseinstellmittel (58) zwischen dem flanschförmigen Abschnitt (52) der Verschlussschraube (42) und dem Flansch (30) der Ankerscheibenanordnung (14) angeordnet ist.

6. Elektromagnetische Kupplungsvorrichtung (10) nach einem der Ansprüche 3 bis 5,
**dadurch gekennzeichnet, dass** die Verschlussschraube (42) in eine Öffnung (48) des Flansches (30) der Ankerscheibenanordnung (14) einschraubbar ist, und sich in axialer Richtung an den nabenförmigen Abschnitt (32) des Flansches (30) anschließt.

7. Elektromagnetische Kupplungsvorrichtung (10) nach Anspruch 6,
**dadurch gekennzeichnet, dass** über das wenigstens eine Abstandseinstellmittel (58) die Position der Verschlussschraube (42) in axialer Richtung nach dem Einschrauben in der Öffnung in dem Flansch (30) veränderbar ist.

8. Elektromagnetische Kupplungsvorrichtung (10) nach einem der voranstehenden Ansprüche,
**dadurch gekennzeichnet, dass** die Verschlussschraube (42) derart ausgebildet ist, dass sie einen Kopf der Befestigungsschraube (44) aufnimmt, wobei eine Befestigungskraft von der Befestigungsschraube (44) auf die Verschlussschraube (42) ausgeübt wird.

9. Elektromagnetische Kupplungsvorrichtung (10) nach einen der Ansprüche 2 bis 8,
**dadurch gekennzeichnet, dass** das wenigstens eine Abstandseinstellmittel (58) im Wesentlichen scheibenförmig ausgebildet ist, und sich die Verschlussschraube (42) durch das wenigstens eine Abstandseinstellmittel (58) erstreckt.

10. Elektromagnetische Kupplungsvorrichtung (10) nach einem der voranstehenden Ansprüche,
**dadurch gekennzeichnet, dass** die Rotoranordnung (12) wenigstens einen Riemenscheibenauflageabschnitt (16) umfasst.

11. Hilfsaggregat für ein Kraftfahrzeug mit einer Kupplungsvorrichtung (10) nach einem der voranstehend beschriebenen Ansprüche, wobei die Ankerscheibenanordnung (14) über den nabenförmigen Abschnitt (32) des Flansches (30) und die Befestigungsschraube (44) fest mit einer Antriebswelle (28) des Hilfsaggregats verbunden ist,
**dadurch gekennzeichnet, dass** die Verschlussschraube (42) zumindest abschnittsweise über die Befestigungsschraube (44) mit der Antriebswelle (28) in Anlage bringbar ist.

12. Hilfsaggregat nach Anspruch 11,
**dadurch gekennzeichnet, dass** in Abhängigkeit von dem wenigstens einen Abstandseinstellmittel (58) die Position der Ankerscheibenanordnung (14) auf der Antriebswelle (28) nach dem Verschrauben der Befestigungsschraube (44) mit der Antriebswelle (28) verändert ist.

13. Hilfsaggregat nach Anspruch 11 oder 12,
**dadurch gekennzeichnet, dass** die Befestigungsschraube (44) in eine Öffnung in einer axialen Endfläche (50) der Antriebswelle (28) einschraubbar ist, wobei sich eine axiale Endfläche (62) der Verschlussschraube (42) an die axiale Endfläche (50) der Antriebswelle (28) anlegt.

## Claims

1. Electromagnetic coupling apparatus (10) for drive arrangements, having:
- an armature disc arrangement (14) which comprises at least one armature disc,
- a rotor arrangement (12),
wherein the armature disc arrangement (14) comprises at least one air gap-adjusting unit (LE) having a closure screw (42), which interacts with a fastening screw (44) for fastening the armature disc arrangement (14) to a drive shaft (28) in order to adjust an air gap (LS) between the armature disc arrangement (14) and the rotor arrangement (12),
**characterised in that** the air gap-adjusting unit (LE) comprises at least one spacing adjusting means (58) which is mounted on the armature disc arrangement (14) via the closure screw (42).

2. Electromagnetic coupling apparatus (10) according to Claim 1,
**characterised in that** the fastening screw (44) extends through the closure screw (42).

3. Electromagnetic coupling apparatus (10) according to one of the preceding claims,
**characterised in that** the closure screw (42) has a flange-shaped section (52) which extends in the radial direction.

4. Electromagnetic coupling apparatus (10) according to one of the preceding claims,
**characterised in that** the armature disc arrangement (14) has at least one flange (30) which extends in the radial direction, and on which a hub-shaped section (32) for receiving a drive shaft (28) is formed.

5. Electromagnetic coupling apparatus (10) according to Claim 3 and 4,
**characterised in that** the at least one spacing adjusting means (58) is arranged between the flange-shaped section (52) of the closure screw (42) and the flange (30) of the armature disc arrangement (14).

6. Electromagnetic coupling apparatus (10) according to one of Claims 3 to 5,
**characterised in that** the closure screw (42) is screwable into an opening (48) of the flange (30) of the armature disc arrangement (14), and adjoins the hub-shaped section (32) of the flange (30) in the axial direction.

7. Electromagnetic coupling apparatus (10) according to Claim 6,
**characterised in that** the position of the closure screw (42) is changeable in the axial direction after screwing-in in the opening in the flange (30) via the at least one spacing adjusting means (58).

8. Electromagnetic coupling apparatus (10) according to one of the preceding claims,
**characterised in that** the closure screw (42) is formed in such a manner that it receives a head of the fastening screw (44), a fastening force being exerted on the closure screw (42) by the fastening screw (44).

9. Electromagnetic coupling apparatus (10) according to one of Claims 2 to 8,
**characterised in that** the at least one spacing adjusting means (58) is formed substantially disc-shaped, and the closure screw (42) extends through the at least one spacing adjusting means (58).

10. Electromagnetic coupling apparatus (10) according to one of the preceding claims,
**characterised in that** the rotor arrangement (12) comprises at least one belt pulley bearing section (16).

11. Auxiliary unit for a motor vehicle having a coupling apparatus (10) according to one of the above-described claims, the armature disc arrangement (14) being fixedly connected to a drive shaft (28) of the auxiliary unit via the hub-shaped section (32) of the flange (30) and the fastening screw (44),
**characterised in that** the closure screw (42) can be brought into abutment at least sectionally with the drive shaft (28) via the fastening screw (44).

12. Auxiliary unit according to Claim 11,
**characterised in that** the position of the armature disc arrangement (14) on the drive shaft (28) is changed, after screwing the fastening screw (44) to the drive shaft (28), in dependence on the at least one spacing adjusting means (58).

13. Auxiliary unit according to Claim 11 or 12,
**characterised in that** the fastening screw (44) is screwable into an opening in an axial end face (50) of the drive shaft (28), and in doing so an axial end face (62) of the closure screw (42) bears against the axial end surface (50) of the drive shaft (28).

## Revendications

1. Dispositif d'accouplement électromagnétique (10) pour systèmes d'entraînement, comprenant :
- un système de disque d'induit (14) qui comporte au moins un disque d'induit,
- un système de rotor (12),
ledit système de disque d'induit (14) comportant au moins une unité de réglage d'entrefer (LE) qui présente une vis de fermeture (42) et qui, pour régler un entrefer (LS) entre le système de disque d'induit (14) et le système de rotor (12), coopère avec une vis de fixation (44) afin de fixer le système de disque d'induit (14) sur un arbre d'entraînement (28),
**caractérisé en ce que** l'unité de réglage d'entrefer (LE) comporte au moins un moyen de réglage d'espacement (58) qui est monté sur le système de disque d'induit (14) par le biais de la vis de fermeture (42).

2. Dispositif d'accouplement électromagnétique (10) selon la revendication 1,
**caractérisé en ce que** la vis de fixation (44) s'étend à travers la vis de fermeture (42).

3. Dispositif d'accouplement électromagnétique (10) selon l'une des revendications précédentes,
**caractérisé en ce que** la vis de fermeture (42) présente une partie (52) en forme de bride qui s'étend dans la direction radiale.

4. Dispositif d'accouplement électromagnétique (10) selon l'une des revendications précédentes,
**caractérisé en ce que** le système de disque d'induit (14) présente au moins une bride (30) qui s'étend dans la direction radiale et sur laquelle est réalisée une partie en forme de moyeu (32) destinée à recevoir un arbre d'entraînement (28).

5. Dispositif d'accouplement électromagnétique (10) selon les revendications 3 et 4,
**caractérisé en ce que** ledit au moins un moyen de réglage d'espacement (58) est disposé entre la partie en forme de bride (52) de la vis de fermeture (42) et la bride (30) du disque d'induit (14).

6. Dispositif d'accouplement électromagnétique (10) selon l'une des revendications 3 à 5,
**caractérisé en ce que** la vis de fermeture (42) peut être vissée dans une ouverture (48) de la bride (30) du disque d'induit (14) et ainsi raccordée dans la direction radiale à la partie en forme de moyeu (32) de la bride (30).

7. Dispositif d'accouplement électromagnétique (10) selon la revendication 6,
**caractérisé en ce que** la position de la vis de fermeture (42) peut être modifiée dans la direction axiale, dans la bride (30), par l'intermédiaire dudit au moins un moyen de réglage d'espacement (58).

8. Dispositif d'accouplement électromagnétique (10) selon l'une des revendications précédentes,
**caractérisé en ce que** la vis de fermeture (42) est conçue de manière à pouvoir recevoir une tête de la vis de fixation (44), une force de fixation étant exercée par la vis de fixation (44) sur la vis de fermeture (42).

9. Dispositif d'accouplement électromagnétique (10) selon l'une des revendications 2 à 8,
**caractérisé en ce que** ledit au moins un moyen de réglage d'espacement (58) est réalisé pour l'essentiel en forme de disque et **en ce que** la vis de fermeture (42) s'étend à travers ledit au moins un moyen de réglage d'écartement (58).

10. Dispositif d'accouplement électromagnétique (10) selon l'une des revendications précédentes,
**caractérisé en ce que** le système de rotor (12) comporte au moins une partie d'appui de poulie-courroie (16).

11. Unité auxiliaire pour véhicule automobile équipée d'un dispositif d'accouplement (10) selon l'une des revendications énoncées ci-dessus, le système de disque d'induit (14) étant relié de manière solidaire à un arbre d'entraînement (28) de l'unité auxiliaire par l'intermédiaire d'une partie en forme de moyeu (32) de la bride (30) et de la vis de fixation (44), **caractérisé en ce que** la vis de fermeture (42) peut être mise au moins partiellement en contact avec l'arbre d'entraînement (28) par l'intermédiaire de la vis de fixation (44).

12. Unité auxiliaire selon la revendication 11,
**caractérisé en ce qu'**en fonction dudit au moins un moyen de réglage d'espacement (58), la position du système de disque d'induit (14) sur l'arbre d'entraînement (28) peut être modifiée après que la vis de fixation (44) a été vissée sur l'arbre d'entraînement (28).

13. Unité auxiliaire selon la revendication 11 ou 12,
**caractérisé en ce que** la vis de fixation (44) peut être vissée dans une ouverture ménagée dans une face d'extrémité axiale (50) de l'arbre d'entraînement (28), une face d'extrémité axiale (62) de la vis de fermeture (42) s'appuyant sur la face d'extrémité axiale (50) de l'arbre d'entraînement (28).
